# EUROPEAN PATENT APPLICATION

(11) **EP 3 772 198 A1**
(43) Date of publication of application: **03.02.2021**
(21) Application number: 20187665.3
(22) Date of filing: 24.07.2020
(51) Int. Cl.: H04L 12/10

(54) **WIRELESS INDUCTIVE CHARGER WITH POWER OVER ETHERNET**

(30) Priority: 02.08.2019 GB 201911072
(71) Applicant: ESC Digital Media Ltd, Walton-on-Thames, Surrey KT12 3PU (GB)
(72) Inventor: Rees, Ian, Walton-on-Thames, Surrey KT12 3PU (GB)
(74) Representative: Fry, David John

(57) **Abstract**

An apparatus, system and method for wireless charging and contactless payment for smart devices, comprising at least one wireless charging and contactless payment apparatus comprising: a landing pad, arranged to provide wireless power transmission charging to a compatible smart device placed on the pad; an input ethernet port, wherein the charging power available at the pad is power over the ethernet received via the ethernet port; and wherein the apparatus is arranged to receive TCP/IP data via the ethernet port; wireless data transmission-receiving means suitable for contactless payment; and at least one network switch connectable to the internet and connectable to the at least one apparatus via an ethernet cable, which at least one network switch is arranged to handle power and data distribution received at the at least one apparatus; and a control server with a user interface arranged to be connectable and control the power and data distribution of the network switches and apparatuses, wherein the server is local or connectable over the internet.

## Description

### Field of the Invention

The present invention relates to a wireless power transfer apparatus and method for charging smart mobiles devices, which apparatus is powered and controlled via power over the ethernet. In addition, the invention provides further features, such contactless payment and/or transmission of data via the ethernet path to and from the mobile devices to a server.

### Background to the invention

In today's world personal smart devices, such as mobile phones, tablets and smart watches, are part of daily life. Because these devices are generally carried around on one's person all day, there is a constant need to keep these devices charged. Cables and powerpacks are inconvenient, cumbersome or they get left behind.

Wireless power transfer devices such as the Qi standard using resonant inductive coupling is increasing. However, these devices tend to require extensive cabling for mass installation and waste energy as are always left switched on.

This invention provides a solution for powering a wireless power transfer enabled devices only when it is required and using reduced cabling. The invention proposes a device that uses an ethernet or Category 5 cable (Cat 5), thus providing power over the ethernet. In addition, the invention provides further features, such contactless payment and/or transmission of data via the ethernet path to and from the mobile devices to a server, via Radio-frequency identification RFID, or Near-field communication NFC, the ethernet network and the internet.

### Summary of the Invention

According to a first aspect of the invention there is provided an apparatus for charging a personal smart device, comprising:
a landing pad, arranged to provide wireless power transmission charging to a compatible smart device placed on the pad; and
an input ethernet port;
wherein the charging power available at the pad is power over the ethernet received via the ethernet port; and
wherein the apparatus is arranged to transmit and receive TCP/IP data via the ethernet port.

Preferably, the apparatus may further comprise wireless data transmission-receiving means at the pad.

Preferably, the data transmission-receiving means may be one or a combination of RFID, NFC, Bluetooth, Wi-Fi, hotspot capability, etc.

The data transmission-receiving means may suitable for contactless payment.

Preferably, the apparatus may be arranged to be connectable via an ethernet cable to a network switch, which network switch may be arranged to handle power and data distribution received at the apparatus, and the network switch may connectable to the internet.

Preferably, the apparatus may further comprise one or more output ethernet ports, and wherein the apparatus may be arranged to additionally act as a network switch capable of handling power and data distribution.
Preferably, the apparatus may additionally comprise one or more USB power output ports.

Preferably, the apparatus may further comprise an LED indicator and/or digital display arranged to provide status, charging and/or data information.

Preferably, the apparatus may further comprise a trigger or a switch arranged to activate the charging pad from a standby mode, in which standby mode the power charging is disabled.

Preferably, the switch may be a push button activated by a user.

Preferably, the switch may be an under the pad button activated by the weight of the device, or may be a proximity switch.

Preferably, the RFID and/or Bluetooth of the apparatus may be on low power draining mode and may be used as triggers to activate the powering of the charger when a mobile phone is close to the pad.

Preferably, the apparatus may be arranged to be installable in an aperture of a surface, or the apparatus may be a standalone enclosed unit tethered to an ethernet cable and may be arranged to be repositionable on a surface.

According to a second aspect of the invention there is provided a system for wireless charging and contactless payment for smart devices comprising:
at least one apparatus comprising:
   a landing pad, arranged to provide wireless power transmission charging to a compatible smart device placed on the pad;
   an input ethernet port, wherein the charging power available at the pad is power over the ethernet received via the ethernet port; and wherein the apparatus is arranged to receive TCP/IP data via the ethernet port;
   wireless data transmission-receiving means suitable for contactless payment; and
at least one network switch connectable to the internet and connectable to the at least one apparatus via an ethernet cable, which at least one network switch is arranged to handle power and data distribution received at the at least one apparatus; and
   a control server with a user interface arranged to be connectable and control the power and data distribution of the network switches and apparatuses, wherein the server is local or connectable over the internet.

According to a third aspect of the invention there is provided a method of powering and controlling one or more wireless charging and contactless payment apparatuses via a control server, which control server is connectable to one or more network switches, wherein each network switch is connectable to, and provides data and power over the network to the one or more apparatus, wherein each apparatus comprises:
a landing pad, arranged to provide wireless power transmission charging to a compatible smart device placed on the pad;
an input ethernet port, wherein the charging power available at the pad is power over the ethernet received via the ethernet port; and wherein the apparatus is arranged to receive TCP/IP data via the ethernet port; and
wireless data transmission-receiving means suitable for contactless payment.

### Brief Description of the Drawings

The invention will now be described by way of example only with reference to the accompanying drawings in which:
Figure 1 shows an illustration of elements of an embodiment in accordance with of the invention, showing a wireless charging and wireless communicating apparatus, a network connector and a network switch;
Figure 2 shows an exploded view illustration of an apparatus in accordance with the invention, showing a wireless charging and wireless communicating pad and a network cable connectable to the device via a network port (not visible in this
Figure) on the apparatus, as well as components for installing the apparatus in an aperture of a desk.

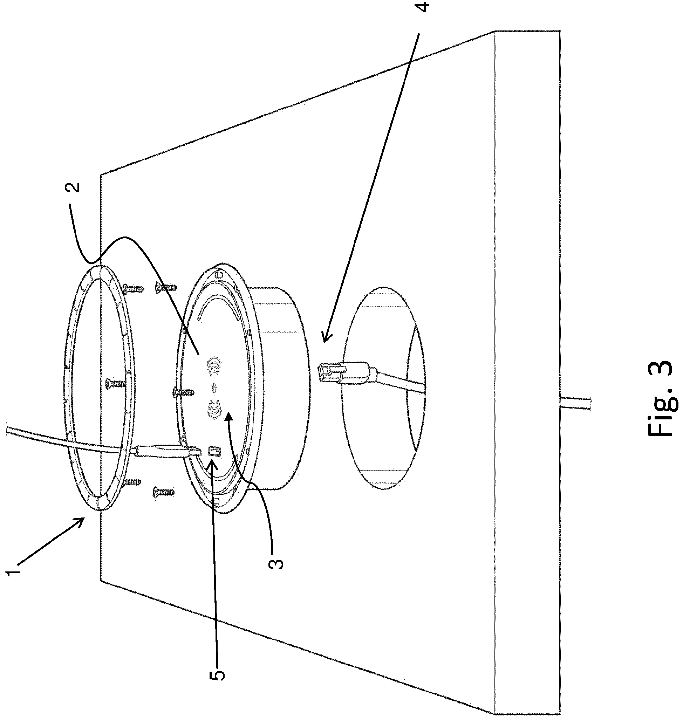

Figure 3 shows a variation of the invention in Figure 2, with the addition of a USB port.
Figure 4 shows an illustration of the perspective view of the apparatus;
Figure 5 shows an illustration of the top view of the apparatus;
Figure 6 shows an illustration of a further embodiment of the apparatus showing the top view having a USB port;
Figure 7 shows an illustration of the side view of the apparatus;
Figure 8 shows an illustration of the bottom view of the apparatus, showing a network port of the apparatus;

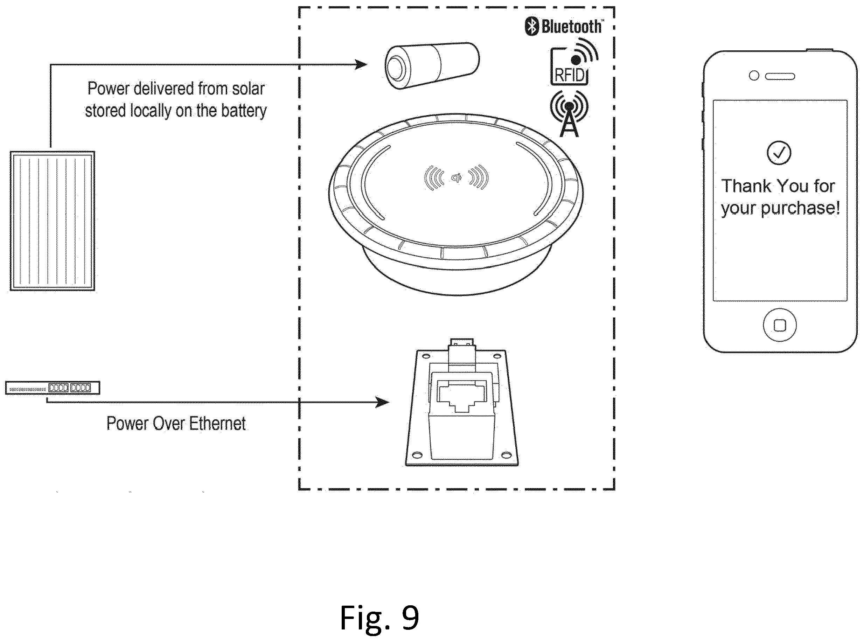

Figure 9 shows an illustration of a further embodiment in accordance with the invention.

### Detailed Description of the Invention

This invention provides a solution for powering a wireless power transfer enabled apparatus only when it is required and using reduced cabling. The invention proposes a device that uses an ethernet port and cable, such as e.g. Category 5 (Cat 5) standard, thus providing power over the ethernet. In addition, the invention provides further features, such contactless payment and/or transmission of data via the ethernet path to and from the mobile devices to a server, via Radio-frequency identification RFID, or Near-field communication NFC, the ethernet network and the internet.

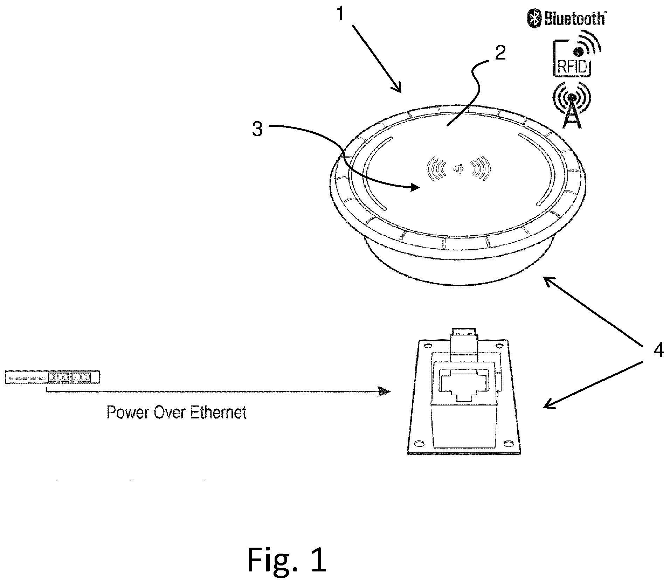

In more detail, an apparatus 1 for charging a personal mobile device in accordance with a first aspect of the invention is shown in Figure 1. The apparatus comprises an enclosure 2. The enclosure 2 may be a box or a cylinder, with an top side, a bottom side and with either a number of side walls or a continuous warp around side wall.

The apparatus 1 has a landing or placement pad 3 on the top side of the enclosure 2. The apparatus 1 has an opening 4 on the bottom side of the enclosure. The opening 4 hosts an ethernet port, also called a jack or socket. In this embodiment the ethernet port is a Category 5, Cat 5, port, which is suitable and compatible with power over the ethernet. In other embodiments other network port standards may be used.

Therefore, the invention provides in a first embodiment an apparatus for charging a personal smart device, comprising, a landing, placement or charging pad, arranged to provide wireless power transmission charging to a compatible smart device placed on the pad; and an input ethernet port; wherein the charging power available at the pad is power over the ethernet received via the ethernet port; and wherein the apparatus is arranged to transmit and receive TCP/IP data via the ethernet port.

The wireless power transfer in the charging pad is wireless inductive Qi (standard) charging pad that uses resonant inductive coupling to transfer electromagnetic power via power transmitter coils to a receiving smart device, such as a mobile phone, smartwatch, health bracelet, tablet, power pack, and the like, with wireless charging capabilities, i.e. with power receiving coils.

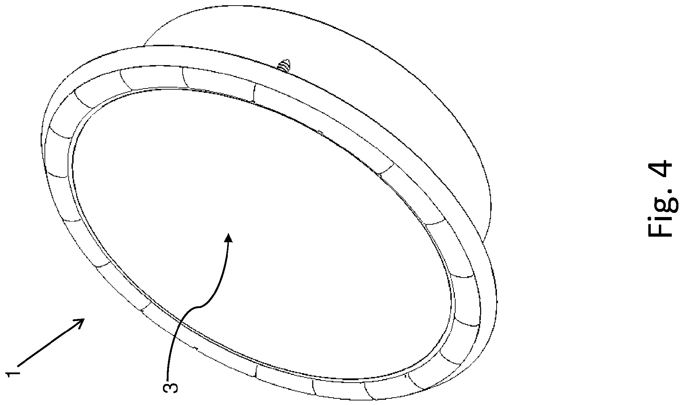

Figure 4 shows an illustration of the perspective view of the apparatus;

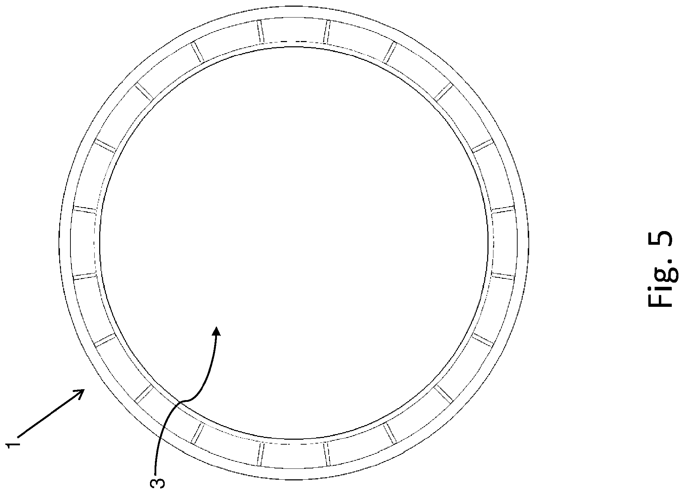

Figure 5 shows an illustration of the top view of the apparatus;

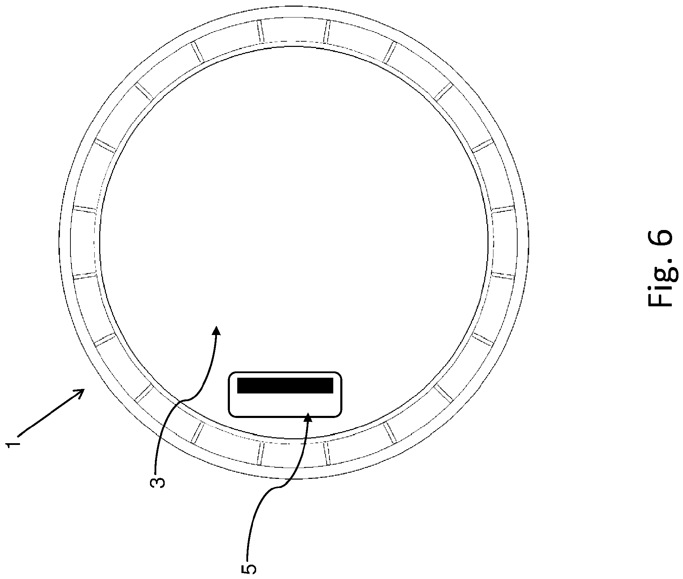

Figure 6 shows an illustration of a further embodiment of the apparatus showing the top view having a USB port;

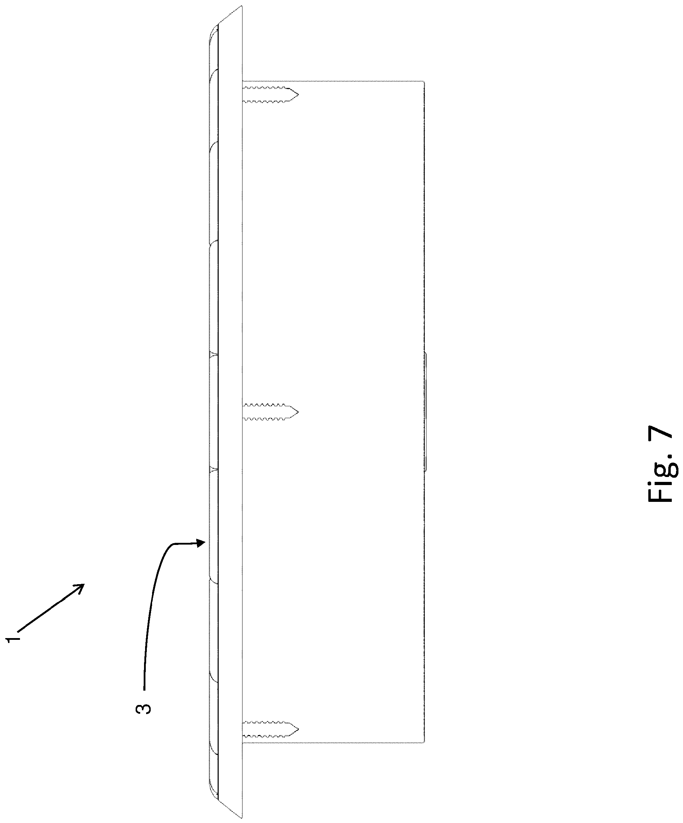

Figure 7 shows an illustration of the side view of the apparatus;

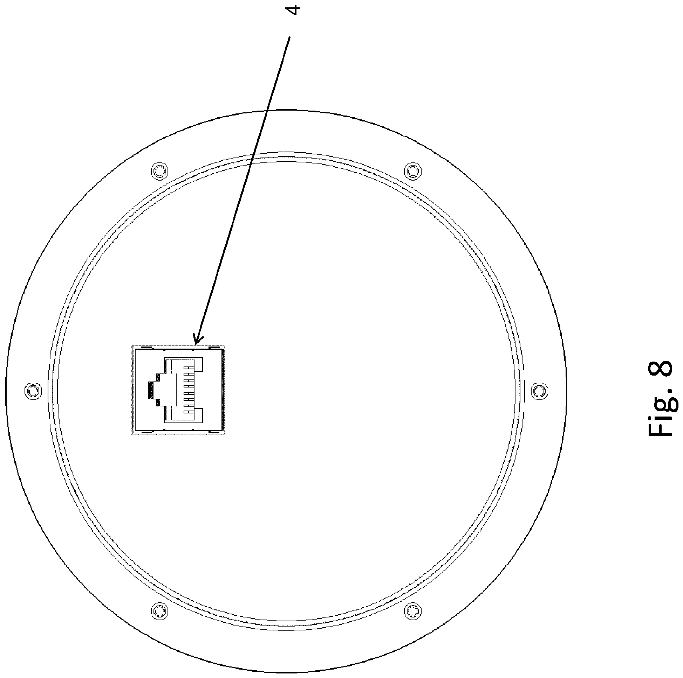

Figure 8 shows an illustration of the bottom view of the apparatus, showing a network port of the apparatus;

The charger receives power over ethernet in accordance with IEEE 802.3 standards.

There are several common techniques for transmitting power over Ethernet cabling. Two of them have been standardised by IEEE 802.3. These standards are known as Alternative A and Alternative B. For 10BASE-T and 100BASE-TX, only two of the four signal pairs in typical Cat5 cable are used. Alternative B separates the data and the power conductors, making troubleshooting easier. It also makes full use of all four twisted pairs in a typical Cat 5 cable. The positive voltage runs along pins 4 and 5, and the negative along pins 7 and 8.

The apparatus may further comprise wireless data transmission-receiving means at the pad. The data transmission-receiving means may be one or a combination of RFID, NFC, Bluetooth, Wi-Fi. The apparatus may also act as a Wi-Fi hotspot via which mobile devices may connect to the internet or the network, e.g. to access a menu or ordering page of a shop or food establishment.

Other cabling or categories are also possible, as show from the Power over Ethernet table below, wherein PSE is power sourcing equipment, PD is powered device and LLDP is link layer discovery protocol.

| **Property** | **802.3af (802.3at Type 1)"PoE"** | **802.3at Type 2 "PoE+"** | **802.3bt Type 3 "4PPoE"** | **802.3bt Type 4** |
|---|---|---|---|---|
| Power available at PD | 12.95 W | 25.50 W | 51 W | 71 W |
| Maximum power delivered by PSE | 15.40 W | 30.0 W | 60 W | 100 W |
| Voltage range (at PSE) | 44.0-57.0 V | 50.0-57.0 V | 50.0-57.0 V | 52.0-57.0 V |
| Voltage range (at PD) | 37.0-57.0 V | 42.5-57.0 V^{]} | 42.5-57.0 V | 41.1-57.0 V |
| Maximum current Iₘₐₓ | 350 mA | 600 mA | 600 mA per pair | 960 mA per pair |
| Maximum cable resistance per | pairset 20 Ω (Category 3) | 12.5 Ω (Category 5) | 12.5 Ω | 12.5 Ω |

| Power management | Three power class levels negotiated by signature | Four power class levels negotiated by signature or 0.1 W steps negotiated by LLDP | Three power class levels negotiated by signature or 0.1 W steps negotiated by LLDP | 0.1 W steps negotiated by LLDP |
|---|---|---|---|---|
| Derating of maximum cable ambient operating temperature | None | 5 °C (9 °F) with one mode (two pairs) active | 10 °C (20 °F) with more than half of bundled cables pairs at Iₘₐₓ max | 10°C (20 °F) with temperature planning required |
| Supported cabling | Category 3 and Category 5 | Category 5 | Category 5 | Category 5 |
| Supported modes | Mode A (endspan), Mode B (midspan) | Mode A, Mode B | Mode A, Mode B, 4-pair mode | 4-pair mode |

The ethernet cable is then connected and receives power and control from an Ethernet Routing Switch, which may be a series of stackable Layer 3 switches used in computer networking. Common switches may handle 48 or more channels, which translates to 48 or more Qi chargers.

The ethernet cable may handle data and power transmission. As such the RFID, NFC, Bluetooth and Wi-Fi may also connect to the ethernet data transmission.

The RFID and Bluetooth may be on low power draining mode and may be used as triggers or switched to activate the powering of the Qi charger when a mobile phone is close to the charger.

The data transmission-receiving means may suitable for contactless payment. They may be via RFID or NFC and may also be used in payment method manners such as Apple Pay and Android Pay and connect to a payment server via the ethernet cable and Ethernet Routing Switch.

The Ethernet Routing Switch may receive power from a local battery bank. The battery bank may in addition be charged via local solar cells, and as such is power neutral from the building or the grid.

A server or Ethernet Routing Switch controller may also control the timings of the power transmitted. The switching may also be controlled manually by an operator using a control user interface.

The apparatus is therefore arranged to be connectable via an ethernet cable to a network switch, which network switch may be arranged to handle power and data distribution received at the apparatus, and the network switch may connectable to the internet.

The apparatus may further comprise one or more output ethernet ports, and wherein the apparatus may be arranged to additionally act as a network switch capable of handling power and data distribution. Thus, star or distributed networks may be arranged using a network switch with a lower number of ports, but which controlling ports and networked apparatuses is increased by the switch capable apparatuses.

The apparatus may additionally comprise one or more USB power output ports. The USB ports receive power from the ethernet port, and may be used e.g. as a standard USB charging point using a cable to charge a mobile phone that is not equipped with wireless charging receiver.

The apparatus may further comprise an LED indicator and/or digital display arranged to provide status, charging and/or data information.

Preferably, the apparatus may further comprise a trigger or a switch arranged to activate the charging pad from a standby mode, in which standby mode the power charging is disabled.

The switch may be a push button activated by a user when e.g. a smart device.

The switch may be an under the pad button activated by the weight of the device, or may be a proximity switch.

The RFID and/or Bluetooth of the apparatus may be on low power draining mode and are used as triggers to activate the powering of the charger when a mobile phone is close to the pad.

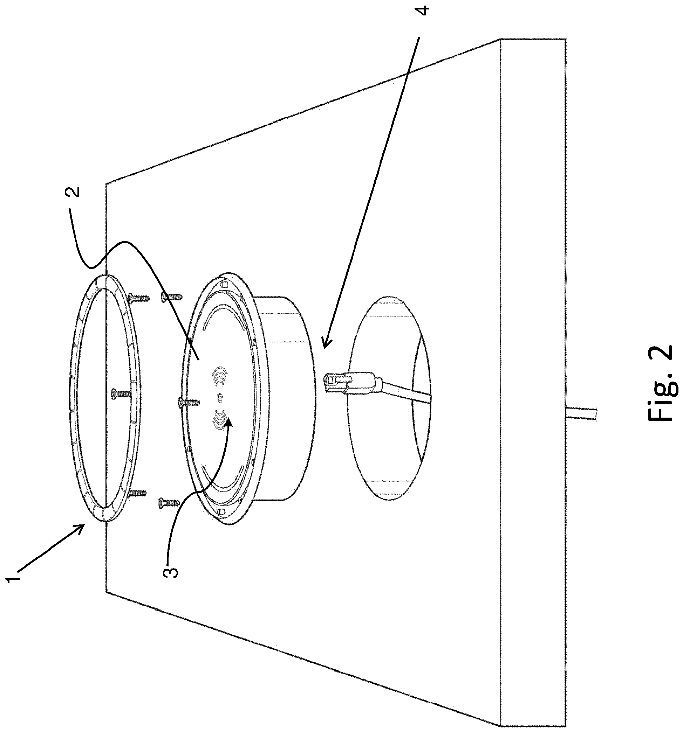

The apparatus may be arranged to be installable in an aperture of a surface, e.g. of a desk, table or counter, as shown in Figure 2.

Alternatively, the apparatus may be a standalone enclosed unit tethered to an ethernet cable and may be arranged to be repositionable on a surface, e.g. of a desk, table or counter.

According to a second aspect of the invention there is provided a system for wireless charging and contactless payment for smart devices comprising:
at least one apparatus comprising: a landing pad, arranged to provide wireless power transmission charging to a compatible smart device placed on the pad;
an input ethernet port, wherein the charging power available at the pad is power over the ethernet received via the ethernet port; and wherein the apparatus is arranged to receive TCP/IP data via the ethernet port; wireless data transmission-receiving means suitable for contactless payment; and at least one network switch connectable to the internet and connectable to the at least one apparatus via an ethernet cable, which at least one network switch is arranged to handle power and data distribution received at the at least one apparatus;
and a control server with a user interface arranged to be connectable and control the power and data distribution of the network switches and apparatuses, wherein the server is local or connectable over the internet.

According to a third aspect of the invention there is provided a method of powering and controlling one or more wireless charging and contactless payment apparatuses via a control server, which control server is connectable to one or more network switches, wherein each network switch is connectable to, and provides data and power over the network to the one or more apparatus, wherein each apparatus comprises:
a landing pad, arranged to provide wireless power transmission charging to a compatible smart device placed on the pad;
an input ethernet port, wherein the charging power available at the pad is power over the ethernet received via the ethernet port; and wherein the apparatus is arranged to receive TCP/IP data via the ethernet port; and wireless data transmission-receiving means suitable for contactless payment.

Other variations and modifications will be apparent to the skilled person. Such variations and modifications may involve equivalent and other features which are already known and which may be used instead of, or in addition to, features described herein.

Features that are described in the context of separate embodiments may be provided in combination in a single embodiment. Conversely, features which are described in the context of a single embodiment may also be provided separately or in any suitable sub-combination.

It should be noted that the term "comprising" does not exclude other elements, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present disclosure.

## Claims

1. An apparatus for charging a personal smart device, comprising:
a landing pad, arranged to provide wireless power transmission charging to a compatible smart device placed on the pad; and
an input ethernet port;
wherein the charging power available at the pad is power over the ethernet received via the ethernet port; and
wherein the apparatus is arranged to transmit and receive TCP/IP data via the ethernet port.

2. The apparatus of claim 1, further comprising wireless data transmission-receiving means at the landing pad.

3. The apparatus of claim 2, wherein the data transmission-receiving means is one or a combination of RFID, NFC, Bluetooth, Wi-Fi, hotspot capability, etc.

4. The apparatus of claims 2 or 3, wherein the data transmission-receiving means is suitable for contactless payment.

5. The apparatus of any of the preceding claims, wherein the apparatus is arranged to be connectable via an ethernet cable to a network switch, which network switch is arranged to handle power and data distribution received at the apparatus, and the network switch is connectable to the internet.

6. The apparatus of any of the preceding claims, further comprising one or more output ethernet ports, and wherein the apparatus is arranged to additionally act as a network switch capable of handling power and data distribution.

7. The apparatus of any of the preceding claims, additionally comprising one or more USB power output ports.

8. The apparatus of any of the preceding claims, further comprising an LED indicator and/or digital display arranged to provide status, charging and/or data information.

9. The apparatus of any of the preceding claims, further comprising a trigger or a switch arranged to activate the charging pad from a standby mode, in which standby mode the power charging is disabled.

10. The apparatus of claim 9, wherein the switch is a push button activated by a user.

11. The apparatus of claim 9, wherein the switch is an under the pad button activated by the weight of the device, or is a proximity switch.

12. The apparatus of claim 9, wherein the RFID and/or Bluetooth of the apparatus are on low power draining mode and are used as triggers to activate the powering of the charger when a mobile phone is close to the pad.

13. The apparatus of any of the preceding claims, wherein the apparatus is arranged to be installable in an aperture of a surface, or the apparatus is a standalone enclosed unit tethered to an ethernet cable and arranged to be repositionable on a surface.

14. A system for wireless charging and contactless payment for smart devices comprising:
at least one apparatus comprising:
a landing pad, arranged to provide wireless power transmission charging to a compatible smart device placed on the pad;
an input ethernet port, wherein the charging power available at the pad is power over the ethernet received via the ethernet port; and wherein the apparatus is arranged to receive TCP/IP data via the ethernet port;
wireless data transmission-receiving means suitable for
contactless payment; and
at least one network switch connectable to the internet and connectable to the at least one apparatus via an ethernet cable, which at least one network switch is arranged to handle power and data distribution received at the at least one apparatus; and
a control server with a user interface arranged to be connectable and control the power and data distribution of the network switches and apparatuses, wherein the server is local or connectable over the internet.

15. A method of powering and controlling one or more wireless charging and contactless payment apparatuses via a control server, which control server is connectable to one or more network switches, wherein each network switch is connectable to, and provides data and power over the network to the one or more apparatus, wherein each apparatus comprises:
a landing pad, arranged to provide wireless power transmission charging to a compatible smart device placed on the pad;
an input ethernet port, wherein the charging power available at the pad is power over the ethernet received via the ethernet port; and wherein the apparatus is arranged to receive TCP/IP data via the ethernet port; and
wireless data transmission-receiving means suitable for contactless payment.
